(19) Europäisches Patentamt

European Patent Office

Office européen des brevets

(11) **EP 1 430 627 B1**

(12) **EUROPÄISCHE PATENTSCHRIFT**

(45) Veröffentlichungstag und Bekanntmachung des Hinweises auf die Patenterteilung:
**09.02.2005 Patentblatt 2005/06**

(21) Anmeldenummer: **02774353.3**

(22) Anmeldetag: **20.09.2002**

(51) Int Cl.⁷: $H04J\ 3/06$, $G06F\ 1/14$

(86) Internationale Anmeldenummer:
**PCT/DE2002/003432**

(87) Internationale Veröffentlichungsnummer:
**WO 2003/028258 (03.04.2003 Gazette 2003/14)**

(54) **VERFAHREN ZUR SYNCHRONISATION VON KNOTEN EINES KOMMUNIKATIONSSYSTEMS**

METHOD FOR SYNCHRONISING NODES OF A COMMUNICATIONS SYSTEM

PROCEDE POUR LA SYNCHRONISATION DE NOEUDS D'UN SYSTEME DE COMMUNICATION

(84) Benannte Vertragsstaaten:
**AT BE BG CH CY CZ DE DK EE ES FI FR GB GR IE IT LI LU MC NL PT SE SK TR**

(30) Priorität: **26.09.2001 DE 10147433**
**28.06.2002 DE 10229110**

(43) Veröffentlichungstag der Anmeldung:
**23.06.2004 Patentblatt 2004/26**

(73) Patentinhaber: **SIEMENS AKTIENGESELLSCHAFT**
**80333 München (DE)**

(72) Erfinder:
• **ARNOLD, Johann**
**90530 Wendelstein (DE)**
• **BRÜCKNER, Dieter**
**96199 Zapfendorf (DE)**
• **GÖTZ, Franz-Josef**
**91180 Heideck (DE)**
• **FRANKE, Michael**
**91056 Erlangen-Dechsendorf (DE)**

(56) Entgegenhaltungen:
**EP-A- 0 991 216**

**Beschreibung**

Die Erfindung betrifft ein Verfahren zur Synchronisation von Knoten eines Kommunikationssystems, insbesondere eines Automatisierungssystems, sowie einen Uhrzeitmaster, und einen Knoten des Kommunikationssystems.

Aus der DE 4215 380 A1 ist ein Verfahren zum Synchronisieren von lokalen Zeitgebern eines Automatisierungssystems bekannt. Bei diesem Verfahren wird ein lokaler Zeitgeber mit einer Zeitinformation synchronisiert, die aus der Zeitinformation eines zentralen Zeitgebers sowie einer der Übertragungs- und Verarbeitungszeit entsprechenden Korrektur gebildet ist. Die Zeitinformation wird von einer dem zentralen Zeitgeber zugehörigen Übertragungseinheit nur dann übertragen, wenn diese von der aktuellen Zeit um weniger als einen vorgegebenen Betrag abweicht.

Aus der DE 199 173 54 A1 ist ein Synchronisationsverfahren für eine Haupteinheit und mindestens eine Nebeneinheit mit internen, miteinander zu synchronisierenden Zeitgebern bekannt. Bei diesem Verfahren werden von der Haupteinheit an die Nebeneinheit über zwei Kommunikationswege Zeitsignale übermittelt, die auf den beiden Kommunikationswegen Laufzeiten zu der Nebeneinheit benötigen. Die Differenz der Laufzeiten der Zeitsignale wird erfasst. Die Synchronisierung der Zeitgeber erfolgt dann unter Berücksichtigung der Laufzeiten.

Aus der DE 197 03 963 A1 ist ein Verfahren zum Austauschen von Daten zwischen dezentral anordnenbaren elektronischen Baugruppen bekannt. Dabei wird eine Baugruppe als Takterzeuger verwendet und zwar ohne einen Redundanzmechanismus.

EP 0991216 offenbart die Merkmale der Präambel der unabhängigen Ansprüche 1, 3 und 5.

Aus dem Stand der Technik sind verschiedene standardisierte Kommunikationssysteme, auch Bussysteme genannt, zum Datenaustausch zwischen zwei oder mehreren elektronischen Baugruppen bzw. Geräten bekannt, insbesondere auch für den Einsatz in Automatisierungssystemen. Beispiele für solche Kommunikationssysteme sind: Feldbus, Profibus, Ethernet, Industrial Ethernet, FireWire oder auch PC-interne Bussysteme (PCI). Diese Bussysteme sind jeweils für unterschiedliche Anwendungsfelder konzipiert bzw. optimiert und erlauben den Aufbau eines dezentralen Steuerungssystems. Für die Prozesssteuerung und - Überwachung in der automatisierten Fertigung und insbesondere bei digitalen Antriebstechniken sind sehr schnelle und zuverlässige Kommunikationssysteme mit vorhersagbaren Reaktionszeiten erforderlich.

Mit parallelen Bussystemen, wie beispielsweise SMP, ISA, PCI oder VME, ist eine sehr schnelle und einfache Kommunikation zwischen verschiedenen Baugruppen aufbaubar. Diese bekannten Bussysteme finden ihren Einsatz dabei insbesondere in Rechnern und PCs.

Insbesondere aus der Automatisierungstechnik sind synchrone, getaktete Kommunikationssysteme mit Äquidistanz-Eigenschaften bekannt. Hierunter versteht man ein System aus wenigstens zwei Teilnehmern, die über ein Datennetz zum Zweck des gegenseitigen Austauschs von Daten bzw. der gegenseitigen Übertragung von Daten miteinander verbunden sind. Dabei erfolgt der Datenaustausch zyklisch in äquidistanten Kommunikationszyklen, die durch den vom System verwendeten Kommunikationstakt vorgegeben werden. Teilnehmer sind beispielsweise zentrale Automatisierungsgeräte, Programmier-, Projektierungs- oder Bediengeräte, Peripheriegeräte wie z.B. Ein- / Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Unter Kontrolleinheiten werden im folgenden Regler- oder Steuerungseinheiten jeglicher Art verstanden.

Ein äquidistanter deterministischer zyklischer Datenaustausch in Kommunikationssystemen basiert auf einer gemeinsamen Takt- bzw. Zeitbasis aller an der Kommunikation beteiligten Komponenten. Die Takt- bzw. Zeitbasis wird von einer ausgezeichneten Komponente (Uhrzeitmaster oder Taktschläger) zu den anderen Komponenten übertragen. Bei Isochronen Realtime-Ethernet wird der Takt bzw. die Zeitbasis von einem Uhrzeitmaster durch das Senden von Synchronisationstelegrammen vorgegeben.

Der Erfindung liegt die Aufgabe zu Grunde ein verbessertes Verfahren zur Synchronisation der Knoten eines Kommunikationssystems zu schaffen sowie einen verbesserten Uhrzeitmaster und Knoten für ein solches Kommunikationssystem.

Die der Erfindung zu Grunde liegende Aufgabe wird jeweils mit den Merkmalen der unabhängigen Patentansprüche 1, 3 und 5 gelöst. Bevorzugte Ausführungsformen der Erfindung sind in den abhängigen Patentansprüchen angegeben.

Die vorliegende Erfindung ermöglicht eine Nachregelung der Zeitbasen in den Knoten eines isochronen Kommunikationssystems. In einer bevorzugten Ausführungsform der Erfindung wird dabei so vorgegangen, dass zumindest ein Uhrzeitmaster ein Synchronisationstelegramm erzeugt, welches den Soll-Empfangszeitpunkt an einem dem Uhrzeitmaster benachbarten ersten Knoten beinhaltet. Dieser Soll-Empfangszeitpunkt wird von dem Uhrzeitmaster basierend auf seiner Master-Zeitbasis und der dem Uhrzeitmaster bekannten Leitungslaufzeit des Synchronisationstelegramms von dem Uhrzeitmaster an den ersten Knoten ermittelt.

Wenn das Synchronisationstelegramm des Uhrzeitmasters von dem Knoten empfangen wird, so wird der Ist-Empfangszeitpunkt von dem Knoten gespeichert. Der Ist-Empfangszeitpunkt wird basierend auf der lokalen Zeitbasis des Knotens ermittelt.

Wenn die lokale Zeitbasis des Knotens synchron mit der Master-Zeitbasis des Uhrzeitmasters ist, sind der Ist-Empfangszeitpunkt und der Soll-Empfangszeitpunkt identisch. Kommt es zu einer Abweichung des Ist-Empfangszeitpunkts von dem Soll-Empfangszeitpunkt, so wird diese Abweichung als Grundlage für die Nachregelung der lokalen Zeitbasis in dem Knoten benutzt, um diese mit der Master-Zeitbasis in dem Uhrzeitmaster zu synchronisieren.

Zur Synchronisierung der weiteren Knoten des Kommunikationssystems wird in einer bevorzugten Ausführungsform der Erfindung wie folgt vorgegangen: Derjenige Knoten, der das Synchronisationstelegramm von dem Uhrzeitmaster empfangen hat, bestimmt den Soll-Empfangszeitpunkt eines weiteren Synchronisationstelegramms an einem zweiten Knoten, der dem ersten Knoten benachbart ist. Der Soll-Empfangszeitpunkt an dem zweiten Knoten wird von dem ersten Knoten basierend auf dem Soll-Empfangszeitpunkt des Synchronisationstelegramms des Uhrzeitmasters ermittelt, indem zu dem in dem Synchronisationstelegramm des Uhrzeitmasters beinhalteten Soll-Empfangszeitpunkt eine Aufenthaltszeit in dem ersten Knoten und die Leitungslaufzeit von dem ersten an den zweiten Knoten addiert werden.

Die Aufenthaltszeit ergibt sich dabei aus der Differenz zwischen dem Empfangszeitpunkt des Synchronisationstelegramms von dem Uhrzeitmaster und dem Sendezeitpunkt des weiteren Synchronisationstelegramms von dem ersten Knoten an den zweiten Knoten.

In dem zweiten Knoten wird entsprechend vorgegangen, indem der Soll-Empfangszeitpunkt eines weiteren Synchronisationstelegramms an einem dritten Knoten ermittelt wird. Hierzu wird dem Soll-Empfangszeitpunkt an dem zweiten Knoten wiederum die Aufenthaltszeit und die Leitungslaufzeit von dem zweiten an den dritten Knoten hinzu addiert.

Von besonderem Vorteil ist diese Synchronisation der Knoten für die Zwecke der Diagnose der Kommunikation in dem Kommunikationssystem. Insbesondere für die Zertifizierung von Komponenten und Teil-Systemen des Kommunikationssystems müssen Informationen in der Applikation eines Netzwerk-Knotens mit einem Uhrzeitstempel versehen werden können.

Beispielsweise kann ein Fehlerereignis im Anlagenbetrieb zu einer Vielzahl von Folgefehlern führen, die jeweils zu Fehlermeldungen im Leitsystem führen. Da sich die Meldungen überholen können, sind Rückschlüsse auf die Fehlerursache nur aufgrund des Uhrzeitstempels möglich. Erst die Uhrzeitinformation der Meldungen, das heißt deren Uhrzeitstempel ermöglicht eine chronologische Sortierung der Meldungen und somit eine Ursachenanalyse. Hierfür ist die erfindungsgemäße Synchronisation der Zeitbasen besonders vorteilhaft, da Vorraussetzung für die chronologische Sortierung die Synchronität der lokalen Zeitbasen der Knoten erforderlich ist.

Von besonderem Vorteil ist dabei insbesondere, dass für alle Knoten des Systems bzw. der Applikation eine Uhrzeit mit definierter Genauigkeit einstellbar ist, wobei diese Uhrzeit von einem Uhrzeitmaster vorgegeben wird. Dabei ist eine hohe Genauigkeit erreichbar, das heißt eine Uhrzeitdifferenz zwischen den lokalen Zeitbasen der Netzwerk-Knoten von zum Beispiel unter 1 μs.

Ein weiterer Vorteil ist, dass von der Applikation die Auswahl des Uhrzeitmasters erkannt werden kann, um zum Beispiel einen redundanten Uhrzeitmaster zu aktivieren. Hierzu kann ein Redundanzmechanismus verwendet werden, wie er in der DE 100 13 397 und in der DE 101 45 518 offenbart ist.

Ein weiterer Vorteil ist darin zu sehen, dass Standard-Uhrzeitmechanismen, wie zum Beispiel Network Time Protocol (NTP) oder Simple Network Time Protocol (SNTP) in das Kommunikationssystem einbindbar sind.

Nach einer bevorzugten Ausführungsform der Erfindung wird für jedes von einem Knoten empfangene Datentelegramm, also nicht nur für die Synchronisationstelegramme, der Empfangszeitpunkt abgespeichert. Auf den Empfangszeitpunkt kann dann eine Applikation des betreffenden Knotens zugreifen. Entsprechend können auch die Sendezeitpunkte aller von einem Knoten gesendeten Telegramm gespeichert werden.

Nach einer weiteren bevorzugten Ausführungsform der Erfindung werden bei allen von einem Knoten gesendeten Datentelegrammen der betreffende Sendezeitpunkt von dem Knoten in den Datenbereich des Datentelegramms eingetragen.

Die erfindungsgemäß mit hoher Genauigkeit für die Netzwerk-Knoten hergestellte gemeinsame Zeitbasis ist also besonders vorteilhaft

- sowohl für eine Analyse des Telegrammverkehrs im Netzwerk,

- als auch für synchronisierte Aktionen in verteilten Systemen der Automatisierungstechnik.

Nach einer bevorzugten Ausführungsform der Erfindung, wird ein Netzwerk-Knoten als Uhrzeitmaster parametriert, auf dessen Uhrzeit sich alle anderen Netzwerk-Knoten synchronisieren müssen. Dazu sendet der Uhrzeitmaster periodisch Synchronisationstelegramme an die anderen Netzwerk-Knoten.

Ins Datenfeld des Synchronisationstelegramms trägt der Uhrzeitmaster die Summe aus

- dem Sendezeitpunkt des Synchronisationstelegramms und

- der Leitungslaufzeit zum benachbarten Netzwerk-Knoten, der das Telegramm empfängt ein.

Bei jedem empfangenen Telegramm und damit auch bei einem empfangenen Synchronisationstelegramm speichern die Netzwerk-Knoten den lokalen Empfangszeitpunkt ab.

Die Abweichung der lokalen Uhrzeit von der Sollzeit ergibt sich aus der zeitlichen Differenz der im Synchronisationstelegramm eingetragenen Zeit und dieser lokalen Empfangszeit. Diese Zeitdifferenz kann eine Regelungssoftware als Eingabegröße zur Korrektur der lokalen Uhrzeit verwenden.

Jeder Netzwerk-Knoten, der ein Synchronisationstelegramm weiterleitet, addiert zu der im Synchronisationstelegramm eingetragenen Zeit, die Summe aus

- der lokalen Aufenthaltszeit := (Weiterleitungszeitpunkt-Empfangszeitpunkt) in diesem Knoten und

- der Leitungslaufzeit zum benachbarten Netzwerk-Knoten, der das Telegramm empfängt.

Eine wichtige Voraussetzung für die Genauigkeit der Uhrzeitsynchronisation ist die Bestimmung der Leitungslaufzeiten zwischen jeweils zwei benachbarten Netzwerk-Knoten. Die Messung der Leitungslaufzeit erfolgt vorzugsweise mit folgender Telegrammsequenz:

- Der Initiator der Laufzeitmessung trägt ins Datenfeld des Laufzeitmessungs-Aufruftelegramms den Sendezeitpunkt $t_{Send-Req}$ ein.

- Der Empfänger dieses Laufzeitmessungs-Aufruftelegramms speichert den Empfangszeitpunkt $t_{Rec-Req}$ ab und schickt ein Laufzeitmessungs-Antworttelegramm zum Zeitpunkt $t_{Send-Resp}$ zurück.
  Im Datenfeld dieses Antworttelegramms sind folgende Zeiten eingetragen:

- der Sendezeitpunkt $t_{Send-Req}$ des Aufruftelegramms vom Initiator der Laufzeitmessung

- die Verzögerungszeit $(t_{Send-Resp} - t_{Rec-Req})$ zwischen Aufruf- und Antworttelegramm.

- Der Initiator der Laufzeitmessung speichert den Ankunftszeitpunkt des Laufzeitmessungs-Antworttelegramms $t_{Rec-Resp}$ ab und bestimmt die Leitungslaufzeit mit Hilfe der Formel:

-

$$\text{Leitungslaufzeit} := [\,(t_{Rec-Resp} - t_{Send-Req}) - (t_{Send-Resp} - t_{Rec-Req})\,]\,/\,2$$

In einem nicht redundanten System sendet ein Uhrzeitmaster periodisch nur ein Synchronisationstelegramm. Bei redundanten Systemen sind zwei Fälle zu unterscheiden:

- Ein Uhrzeitmaster sendet periodisch mindestens zwei Synchronisationstelegramme auf unterschiedlichen Wegen zu den Netzwerk-Knoten. Die Regelungssoftware der Netzwerk-Knoten muss jeweils alle empfangenen Synchronisationstelegramme bei der Uhrzeitsynchronisation berücksichtigen.

- Der aktive Uhrzeitmaster und ein redundanter Uhrzeitmaster senden gleichzeitig periodisch Synchronisationstelegramme. Ausgewertet und zur Regelung der Uhrzeit verwendet werden jedoch nur die Synchronisationstelegramme des aktiven Uhrzeitmasters. Erst wenn der redundante Uhrzeitmaster aufgrund ausbleibender Synchronisationstelegramme vom bisher aktiven Uhrzeitmaster seine Synchronisationstelegramme als aktiv markiert, werden diese von der Regelungssoftware zur Uhrzeitsynchronisierung verwendet.

Beide Konstellationen können auch kombiniert werden.

Nach einer weiteren bevorzugten Ausführungsform der Erfindung können auch Standard-Uhrzeitmechanismen wie z.B. von NTP, SNTP eingebunden werden. Standard-Uhrzeittelegramme, die in ein Netzwerk eintreten, dessen Uhrzeit nach dem oben beschriebenen Verfahren synchronisiert wurde, werden in den Datenbereich eines speziellen Telegramms "verpackt". Innerhalb des Netzwerks werden nur diese "verpackten" Standard-Uhrzeittelegramme gesendet. Jeder Netzwerk-Knoten, der ein "verpacktes" Standard-Uhrzeittelegramm ins Netzwerk einspeist, trägt ins Datenfeld dieses Telegramms die Summe aus

- dem Sendezeitpunkt und

- der Leitungslaufzeit zum benachbarten Netzwerk-Knoten, der das Telegramm empfängt, ein.

Jeder Netzwerk-Knoten, der ein "verpacktes" Standard-Uhrzeittelegramm weiterleitet, addiert zu der im Telegramm eingetragenen Aufenthaltszeit im Netzwerk, die Summe aus

- der Aufenthaltszeit im Netzwerk-Knoten := (Weiterleitungszeitpunkt - Empfangszeitpunkt) und

- der Leitungslaufzeit zum benachbarten Netzwerk-Knoten, der das Telegramm empfängt.

Vor dem Verlassen des Netzwerks

- wird das Standard-Uhrzeittelegramm wieder "entpackt" und
- die eingetragene Standard-Uhrzeit um die Telegrammlaufzeit im Netzwerk korrigiert.

Kennzeichen dieses Verfahrens ist die Möglichkeit den Empfangs- und Sendezeitpunkt mit der Genauigkeit eines Bittakts bestimmen und zur Uhrzeitsynchronisierung in einem Netzwerk verwenden zu können. Zur Erhöhung der Betriebssicherheit wird Redundanz bei der Uhrzeitsynchronisierung unterstützt. Außerdem ist die Einbindung von Standard-Uhrzeitmechanismen möglich.

Der Einsatz der beschriebenen Uhrzeitmechanismen ist insbesondere bei der Echtzeit-Ethernet-Kommunikation im Feldbus-Bereich möglich.

Von besonderem Vorteil ist es darüber hinaus, dass die offenbarten Verfahren in Automatisierungssystemen, insbesondere bei und in Verpackungsmaschinen, Pressen, Kunststoffspritzmaschinen, Textilmaschinen, Druckmaschinen, Werkzeugmaschinen, Robotor, Handlingssystemen, Holzverarbeitungsmaschinen, Glasverarbeitungsmaschinen, Keramikverarbeitungsmaschinen sowie Hebezeugen eingesetzt bzw. verwendet werden können.

Im weiteren werden bevorzugte Ausführungsformen der Erfindung mit Bezugnahme auf die Zeichnungen näher erläutert. Es zeigen:

Figur 1     eine Prinzipdarstellung für die Synchronisation der Knoten eines Kommunikationssystems basierend auf einem Uhrzeitmaster,

Figur 2     ein Blockdiagramm eines Uhrzeitmasters und eines Knotens,

Figur 3     ein Flussdiagramm für die Synchronisation der lokalen Zeitbasen,

Figur 4     eine Prinzipdarstellung der Ermittlung der Leitungslaufzeit zwischen benachbarten Netzwerkknoten.

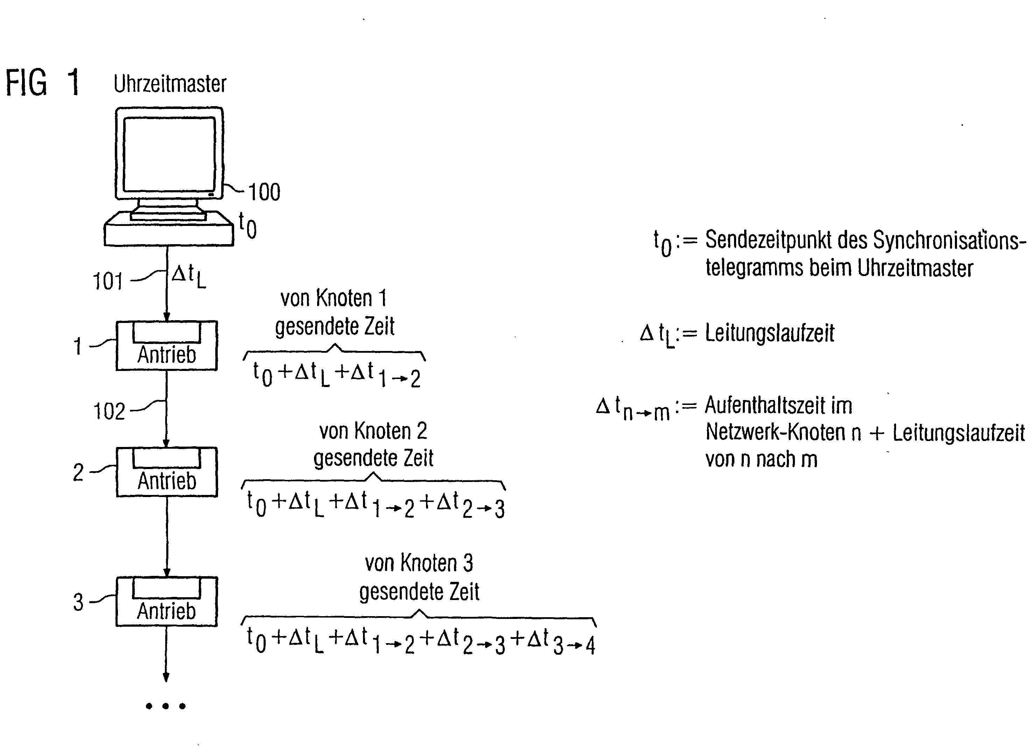

Das Kommunikationssystem der Figur 1 beinhaltet einen Uhrzeitmaster 100, der zur Synchronisation der lokalen Zeitbasen in den Knoten 1, 2, 3, ... des Kommunikationssystems dient. Im Falle eines Automatisierungssystems kann es sich bei den Knoten 1, 2, 3, ... um Sensoren, Aktuatoren, Antriebe oder andere Komponenten oder Teil-Systeme handeln.

Zur Synchronisation sendet der Uhrzeitmaster 100 zum Sendezeitpunkt $t_0$ ein Synchronisationstelegramm an den Knoten 1. Das Synchronisationstelegramm beinhaltet als Nutzdaten den Soll-Empfangszeitpunkt an dem Knoten 1, der sich aus der Addition des Sendezeitpunkts $t_0$ und der Leitungslaufzeit $\Delta t_L$ zwischen dem Uhrzeitmaster 100 und dem Knoten 1 über die Leitung 101 ergibt. Eine Abweichung zwischen dem Soll-Empfangszeitpunkt und dem, aufgrund der lokalen Zeitbasis des Knoten 1 ermittelten Ist-Empfangszeitpunkt wird zur Nachregelung der lokalen Zeitbasis des Knoten 1 verwendet.

Nach dem Empfang des Synchronisationstelegramms von dem Uhrzeitmaster 100 generiert der Knoten 1 ein weiteres Synchronisationstelegramm für den Knoten 2. Dieses wird über die Leitung 102 von dem Knoten 1 an den Knoten 2 gesendet. Als Nutzdaten beinhaltet das von dem Knoten 1 an den Knoten 2 gesendete Synchronisationstelegramm den Soll-Empfangszeitpunkt $t_0+\Delta t_L$, den der Knoten 1 von dem Uhrzeitmaster 100 empfangen hat plus einen Zeitraum $\Delta t_{1\rightarrow2}$, wobei die Zeit $\Delta t_{1\rightarrow2}$ die Aufenthaltszeit in dem Netzwerk-Knoten 1 zuzüglich der Leitungslaufzeit über die Leitung 102 ist.

Die Aufenthaltszeit ist dabei der Zeitraum zwischen dem Empfang des Synchronisationstelegramms von dem Uhrzeitmaster 100 an dem Knoten 1 und dem Weitersenden des Synchronisationstelegramms von dem Knoten 1 an den Knoten 2. Diese Aufenthaltszeit kann sehr genau aufgrund der lokalen Zeitbasis des Knotens 1 bestimmt werden, auch wenn diese noch nicht exakt synchronisiert ist, da es hier nicht auf die absolute Zeit, sondern nur auf den Zeitraum, also auf die relative Aufenthaltszeit im Knoten, insbesondere Knoten 1, ankommt.

Die Nachregelung der Zeitbasis in dem Knoten 2 aufgrund des von dem Knoten 1 empfangenen Synchronisationstelegramms erfolgt prinzipiell gleich wie die zuvorige Nachregelung der Zeitbasis in dem Knoten 1. Als Basis für die Nachregelung in dem Knoten 2 wird also eine eventuelle Abweichung zwischen dem, aufgrund der lokalen Zeitbasis des Knoten 2 bestimmten Ist-Empfangszeitpunkt und dem Soll-Empfangszeitpunkt verwendet, wobei der Soll-Empfangszeitpunkt in den Nutzdaten des von dem Knoten 1 empfangenen Synchronisationstelegramms beinhaltet ist.

Der Knoten 2 addiert zu diesem Soll-Empfangszeitpunkt, das heißt, zu dem Zeitpunkt $t_0 + \Delta t_L + \Delta t_{1 \to 2}$, die Zeit $\Delta t_{2 \to 3}$ hinzu, um ein weiteres Synchronisationstelegramm für den nachfolgenden Knoten 3 zu erzeugen usw.

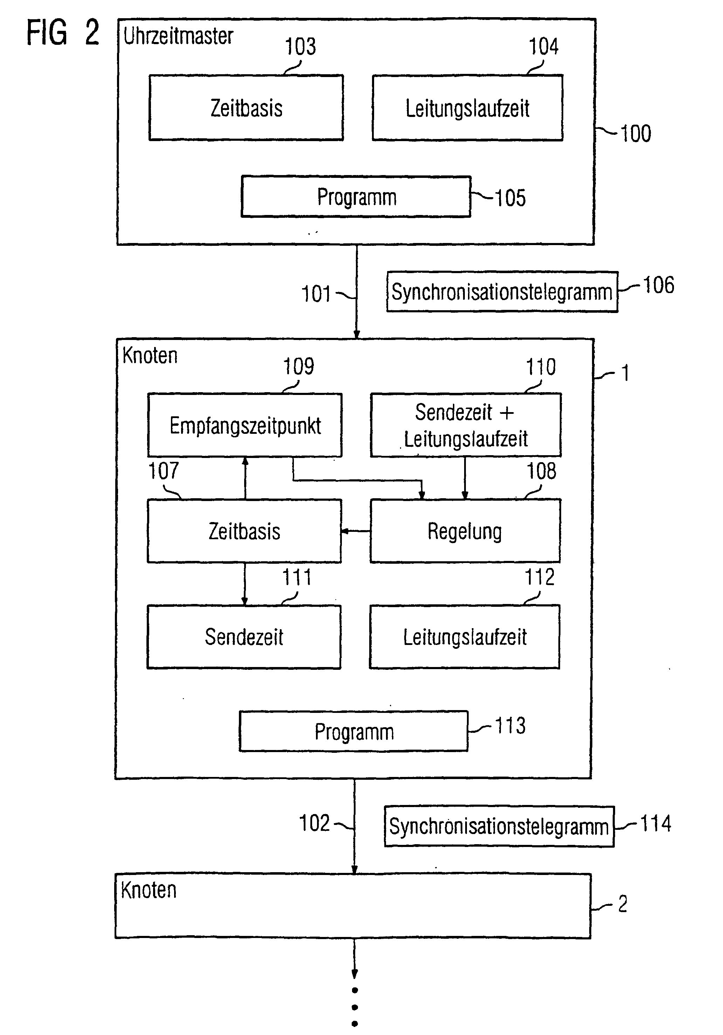

Die Figur 2 zeigt ein der Figur 1 entsprechendes Blockdiagramm.

Der Uhrzeitmaster 100 verfügt über eine Masterzeitbasis 103 und einen Speicher 104 zur Speicherung der Leitungslaufzeit $\Delta t_L$ über die Leitung 101. Ferner hat der Uhrzeitmaster 100 ein Programm 105, welches zur zyklischen Erzeugung und Absendung von Synchronisationstelegrammen 106 dient. Diese Synchronisationstelegramme beinhalten dabei jeweils als Nutzdaten den betreffenden Sendezeitpunkt $t_0$ plus der Leitungslaufzeit $\Delta t_L$.

Der Knoten 1 hat eine lokale Zeitbasis 107 mit einer Regelung 108. Ferner hat der Knoten 1 einen Speicher 109 zur Speicherung der Empfangszeitpunkte von Synchronisationstelegrammen 106. Vorzugsweise dient der Speicher 109 auch zur Speicherung der Empfangszeitpunkte anderer von dem Knoten 1 empfangenen Datentelegrammen.

Der Knoten 1 hat ferner einen Speicher 110 zur Speicherung des Soll-Empfangszeitpunkts, welcher mittels eines Synchronisationstelegramms 106 empfangen worden ist.

Der Knoten 1 hat ferner einen Speicher 111, welcher zur Festlegung von Sendezeitpunkten von Datentelegrammen und insbesondere auch von Synchronisationstelegrammen 114 an den benachbarten Knoten 2 dient. Die Leitungslaufzeit von dem Knoten 1 an den Knoten 2 über die Leitung 102 ist in dem Speicher 112 abgelegt.

Ferner hat der Knoten 1 ein Programm 113, welches zur Erzeugung und Sendung von Synchronisationstelegrammen 114 an den Knoten 2 dient. Als Nutzdaten beinhalten die Synchronisationstelegramme 114 jeweils den Soll-Empfangszeitpunkt aus dem Speicher 110 plus der Aufenthaltszeit plus der Leitungslaufzeit aus dem Speicher 112. Die Aufenthaltszeit ergibt sich dabei aus der Differenz des Sendezeitpunkts des betreffenden Synchronisationstelegramms 114 und dem Empfangszeitpunkt des vorausgehenden Synchronisationstelegramms 106.

Der Knoten 2 und weitere in der Figur 2 nicht gezeigte Knoten des Kommunikationssystems sind prinzipiell gleich aufgebaut wie der Knoten 1.

Beim Betrieb des Kommunikationssystems erzeugt der Uhrzeitmaster ein Synchronisationstelegramm 106, welches von dem Knoten 1 empfangen wird. Der Ist-Empfangszeitpunkt wird in dem Speicher 109 abgelegt; der Soll-Empfangszeitpunkt wird aus dem Synchronisationstelegramm 106 ausgelesen und in dem Speicher 110 abgelegt.

Basierend auf einer Abweichung zwischen dem Ist-Empfangszeitpunkt und dem Soll-Empfangszeitpunkt wird die Zeitbasis 107 durch die Regelung 108 nachgeregelt. Durch diese Nachregelung ist eine Übereinstimmung der Zeitbasis 107 mit der Masterzeitbasis 103 in einem engen Toleranzbereich gewährleistet.

Das Programm 113 erzeugt dann das Synchronisationstelegramm 114, welches als Nutzdaten den Soll-Empfangszeitpunkt des Synchronisationstelegramms 114 an dem Knoten 2 beinhaltet. Aufgrund dessen wird auch die Zeitbasis des Knotens 2 nachgeregelt.

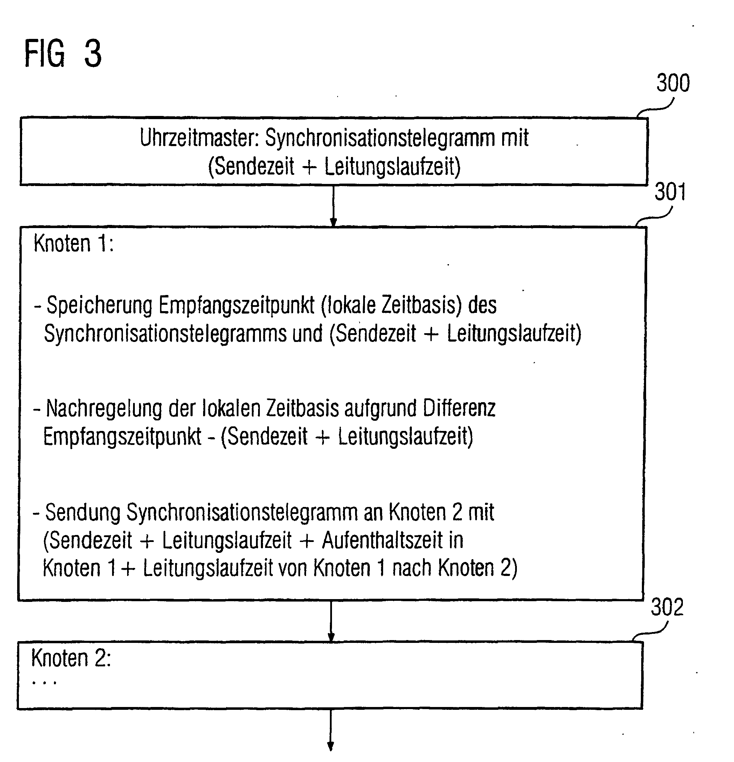

Die Figur 3 zeigt ein entsprechendes Flussdiagramm. In dem Schritt 300 versendet der Uhrzeitmaster ein Synchronisationstelegramm mit dem Soll-Empfangszeitpunkt des Synchronisationstelegramms an einem benachbarten Knoten 1 als Nutzdaten.

In dem Schritt 301 empfängt der Knoten 1 dieses Synchronisationstelegramm und ermittelt für dieses Synchronisationstelegramm den Empfangszeitpunkt basierend auf der lokalen Zeitbasis. Dieser Empfangszeitpunkt wird als Ist-Empfangszeitpunkt bezeichnet. Der Ist-Empfangszeitpunkt sowie der Soll-Empfangszeitpunkt werden von dem Knoten 1 gespeichert. Eine Abweichung zwischen den Ist- und Soll-Empfangszeitpunkten wird als Grundlage für die Bestimmung einer Stellgröße zur Nachregelung der lokalen Zeitbasis in dem Knoten 1 verwendet, um diesen synchron zur Masterzeitbasis des Uhrzeitmasters zu bringen.

Ferner wird von dem Knoten 1 ein Synchronisationstelegramm für den Knoten 2 generiert und ausgesendet. Dieses beinhaltet als Nutzdaten den Soll-Empfangszeitpunkt dieses Synchronisationstelegramms an dem Knoten 2.

In dem Knoten 2 wird aufgrund des Empfangs dieses Synchronisationstelegramms von dem Knoten 1 entsprechend zum Knoten 1 zur Nachregelung der lokalen Zeitbasis des Knotens 2 vorgegangen und ein weiteres Synchronisationstelegramm für einen nachfolgenden Knoten 3 generiert und gesendet. Dieser Vorgang wiederholt sich kaskadenförmig, bis alle hintereinander geschalteten Knoten durchlaufen worden sind. Innerhalb, zum Beispiel vorgegebener Zeitintervalle wird der Schritt 300 erneut ausgeführt, um diese kaskadierte Übertragung und Nachregelung der lokalen Zeitbasen erneut durchzuführen.

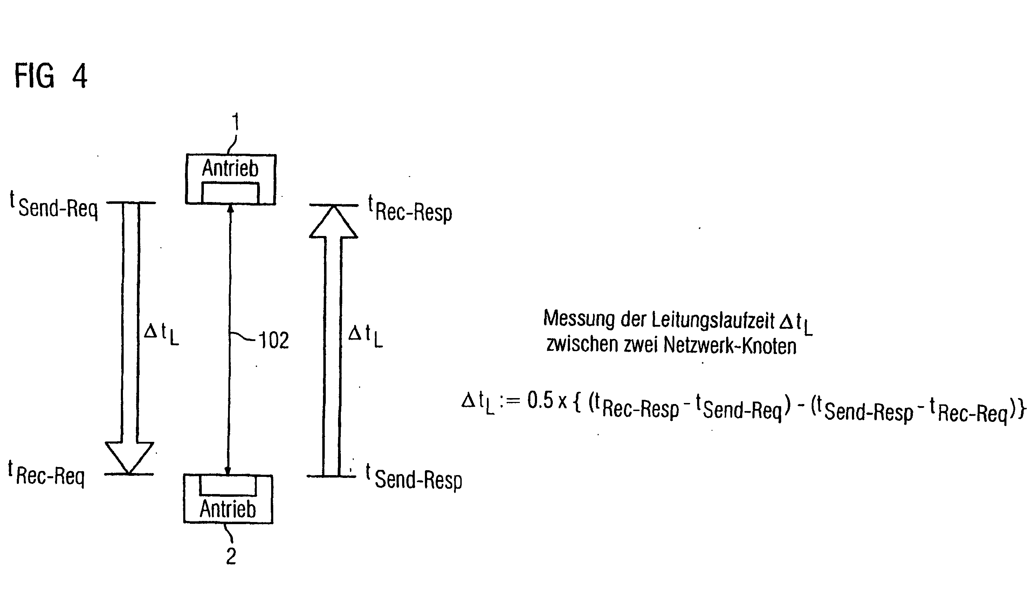

Zur Bestimmung der Leitungslaufzeit zwischen zwei Knoten kann beispielsweise, wie in der Figur 4 dargestellt, vorgegangen werden. Die Figur 4 zeigt die Bestimmung der Leitungslaufzeit $\Delta t_L$ über die Leitung 102 zwischen den Knoten 1 und 2. Zur Durchführung der Laufzeitmessung sendet der Knoten 1 an den Knoten 2 ein Laufzeitmessungs-Aufruftelegramm. In dem Datenfeld des Laufzeitmessungs-Aufruftelegramms befindet sich der Sendezeitpunkt $t_{Send-Req}$, der Empfänger, das heißt der Knoten 2 speichert den Empfangszeitpunkt $t_{Rec-Req}$ des Laufzeitmessungs-Aufruftelegramms an dem Knoten 2 ab und schickt ein Laufzeitmessungs-Antworttelegramm zu dem Zeitpunkt $t_{Send-Resp}$ an den Knoten 1 zurück.

Im Datenfeld dieses Antworttelegramms sind folgende Zeiten eingetragen:

-     der Sendezeitpunkt $t_{Send-Req}$ des Aufruftelegramms vom Initiator der Laufzeitmessung
-     die Verzögerungszeit ($t_{Send-Resp}$ - $t_{Rec-Req}$) zwischen Aufruf und Antworttelegramm.
-     Der Knoten 1 der Laufzeitmessung speichert den Ankunftszeitpunkt des Laufzeitmessungs-Antworttelegramms $t_{Rec-Resp}$ ab und bestimmt die Leitungslaufzeit mit Hilfe der Formel:
-

$$\text{Leitungslaufzeit} := [\ (t_{Rec-Resp} - t_{Send-Req}) - (t_{Send-Resp} - t_{Rec-Req})\ ]\ /\ 2.$$

Mit anderen Worten wird die Leitungslaufzeit $\Delta t_L$ basierend auf der für die Durchführung der Laufzeitmessung insgesamt erforderlichen Zeit abzüglich der Verweilzeit in dem Knoten 2 bestimmt. Die Laufzeit für Hin- und Rückweg wird bei der Berechnung als gleich angenommen, d.h. Hin- und Rückleitung müssen gleich lang sein.

Dieser Vorgang kann beispielsweise aufgrund des Programms 113 in dem Knoten 1 (vgl. Figur 2) initiiert werden. Die so ermittelte Leitungslaufzeit $\Delta t_L$ wird dann von dem Programm 113 in dem Speicher 112 eingetragen.

Bezugszeichenliste

1       Knoten
2       Knoten
3       Knoten
100     Uhrzeitmaster
101     Leitung
102     Leitung
103     Master Zeitbasis
104     Speicher
105     Programm
106     Synchronisationstelegramm
107     lokale Zeitbasis
108     Regelung
109     Speicher
110     Speicher
111     Speicher
112     Speicher
113     Programm
114     Synchronisationstelegramm

**Patentansprüche**

1.  Verfahren zur Synchronisation von Knoten (1, 2, 3) eines Kommunikationssystems mit folgenden Schritten:

-     Empfang eines ersten Synchronisationstelegramms (106) durch einen ersten Knoten (1), wobei das erste Synchronisationstelegramm einen ersten Soll-Empfangszeitpunkt ($t_0 + \Delta t_2$) an dem ersten Knoten beinhaltet,

-     Nachregelung einer Zeitbasis (107) des ersten Knotens basierend auf einer Abweichung zwischen einem, aufgrund der Zeitbasis ermittelten Ist-Empfangszeitpunkt und dem ersten Soll-Empfangszeitpunkt,

-     Sendung eines zweiten Synchronisationstelegramms (114) von dem ersten Knoten an einen benachbarten zweiten Knoten (2), wobei das zweite Synchronisationstelegramm einen zweiten Soll-Empfangszeitpunkt ($t_0 + \Delta t_L + \Delta t_{1\rightarrow2}$) an dem zweiten Knoten beinhaltet,
**dadurch gekennzeichnet, daß** der zweite Soll-Empfangszeitpunkt an dem zweiten Knoten ermittelt wird durch:

- Bestimmung einer Aufenthaltszeit aus dem Sendezeitpunkt des zweiten Synchronisationstelegramms und dem Empfangszeitpunkt des ersten Synchronisationstelegramms,

- Addition der Aufenthaltszeit und einer Leitungslaufzeit ($\Delta t_{1\rightarrow2}$) zwischen dem ersten Knoten und dem zweiten Knoten zu dem ersten Soll-Empfangszeitpunkt an dem ersten Knoten, um den zweiten Soll-Empfangszeitpunkt zu bestimmen.

2. Verfahren nach Anspruch 1, wobei das erste Synchronisationstelegramm durch einen Uhrzeitmaster (100) mit einer Master-Zeitbasis (103) erzeugt wird, wobei der Soll-Empfangszeitpunkt an dem ersten Knoten aus der, aufgrund der Master-Zeitbasis ermittelten Sendezeit und der Leitungslaufzeit (104) von dem Uhrzeitmaster an den ersten Knoten bestimmt wird.

3. Digitales Speichermedium, insbesondere Diskette, CD-ROM oder Halbleiterspeicher, mit Programmmitteln zur Nachregelung der Zeitbasis (107) eines ersten Knotens (1) eines Kommunikationssystems aufgrund des Empfangs eines ersten Synchronisationstelegramms (106) durch den ersten Knoten (1), wobei das Synchronisationstelegramm einen ersten Soll-Empfangszeitpunkt ($t_0 + \Delta t_L$) an dem ersten Knoten beinhaltet, wobei die Nachregelung der Zeitbasis des ersten Knotens basierend auf einer Abweichung zwischen dem, aufgrund der Zeitbasis ermittelten Ist-Empfangszeitpunkt des ersten Synchronisationstelegramms und dem Soll-Empfangszeitpunkt an dem ersten Knoten erfolgt und wobei die Programmmittel zur Erzeugung eines zweiten Synchronisationstelegramms (114) für einen zweiten Knoten ausgebildet sind, und das zweite Synchronisationstelegramm einen zweiten Soll-Empfangszeitpunkt ($t_0 + \Delta t_L + \Delta t_{1\rightarrow2}$) an dem zweiten Knoten beinhaltet,
**dadurch gekennzeichnet, daß** der zweite Soll-Empfangszeitpunkt an dem zweiten Knoten wie folgt ermittelt wird:

- Bestimmung einer Aufenthaltszeit in dem ersten Knoten aus dem Sendezeitpunkt des zweiten Synchronisationstelegramms und dem Empfangszeitpunkt des ersten Synchronisationstelegramms,

- Addition einer Leitungslaufzeit ($\Delta t_{1\rightarrow2}$) zwischen dem ersten und dem zweiten Knoten zu dem ersten Soll-Empfangszeitpunkt an dem ersten Knoten, um den zweiten Soll-Empfangszeitpunkt zu bestimmen.

4. Digitales Speichermedium nach Anspruch 3, wobei die Programmmittel zur Bestimmung der Leitungslaufzeit zwischen dem ersten und dem zweiten Knoten ausgebildet sind.

5. Knoten (1) für ein isochrones Kommunikationssystem, mit einer Zeitbasis (107) und mit Regelungsmitteln (108) zur Regelung der Zeitbasis (107), wobei die Regelungsmittel so ausgebildet sind, dass die Regelung der Zeitbasis basierend auf einer Abweichung zwischen dem, aufgrund der Zeitbasis ermittelten Ist-Empfangszeitpunkt eines ersten Synchronisationstelegramms (106) und dem in dem Synchronisationstelegramm beinhalteten ersten Soll-Empfangszeitpunkt ($t_0 + \Delta t_L$) an dem Knoten durchgeführt wird, mit Mitteln zur Erzeugung eines zweiten Synchronisationstelegramms (114) für einen anderen Knoten (2), wobei das zweite Synchronisationstelegramm einen zweiten Soll-Empfangszeitpunkt ($t_0 + \Delta t_L + \Delta t_{1\rightarrow2}$) an dem anderen Knoten beinhaltet,
**dadurch gekennzeichnet, daß** der zweite Soll-Empfangszeitpunkt an dem anderen Knoten wie folgt ermittelbar ist:

- Bestimmung einer Aufenthaltszeit aus der Differenz der Sendezeit des zweiten Synchronisationstelegramms und dem Empfangszeitpunkt des ersten Synchronisationstelegramms,
- Addition der Leitungslaufzeit ($\Delta t_{1\rightarrow2}$) zwischen dem Knoten und dem anderen Knoten zu dem ersten Soll-Empfangszeitpunkt an dem Knoten, um den zweiten Soll-Empfangszeitpunkt zu bestimmen.

6. Knoten nach Anspruch 5 mit Mitteln zur Bestimmung der Leitungslaufzeit zwischen dem Knoten und dem benachbarten anderen Knoten.

7. Kommunikationssystem mit mindestens einem Uhrzeitmaster mit einer Masterzeitbasis (103) und mit Mitteln zur Sendung eines ersten Synchronisationstelegramms (106) an einen benachbarten ersten Knoten (1) des Kommunikationssystems, wobei das erste Synchronisationstelegramm einen Soll-Empfangszeitpunkt an dem ersten Knoten beinhaltet, der aus dem Sendezeitpunkt des ersten Synchronisationstelegramms von dem Uhrzeitmaster und der Leitungslaufzeit (104) zwischen dem Uhrzeitmaster und dem ersten Knoten ermittelt wird, und mit mehreren Knoten (2, 3) nach einem der vorhergehenden Ansprüche 5 oder 6.

**Claims**

1.  Method for synchronising nodes (1, 2, 3) of a communication system, comprising the following steps:

    -   reception of a first synchronisation telegram (106) by a first node (1), with the first synchronisation telegram containing a reference receive time at the first node (to + $\Delta t_2$),

    -   adjustment of a time base (107) of the first node based on a deviation between an actual receive time determined on the basis of the time base and the reference receive time.

    -   transmission of a second synchronisation telegram (114) from the first node to an adjacent second node (2), with the second synchronisation telegram containing a second reference receive time ($t_0 + \Delta t_L \Delta t_{1 \to 2}$) at the second node, **characterised in that** the second reference receive time at the second node is determined by:

    -   determining a residence time, based on the send time of the second synchronisation telegram and the receive time of the first synchronisation telegram,

    -   adding the residence time and a transmission propagation time ($\Delta t_{1 \to 2}$) between the first node and the second node to the first reference receive time at the first node in order to determine the second reference receive time.

2.  Method according to claim 1, wherein the first synchronisation telegram is generated by a clock master (100) by means of a master time base (103), with the reference receive time at the first node being determined from the send time determined on the basis of the master time base and the transmission propagation time (104) from the clock master to the first node.

3.  Digital storage medium, in particular floppy disk, CD-ROM or semiconductor memory, having program means for adjusting the time base (107) of a first node (1) of a communication system based on the reception of a first synchronisation telegram (106) by the first node (1), wherein the synchronisation telegram contains a first reference receive time ($t_0 + \Delta t_L$) at the first node, with the adjustment of the time base of the first node being performed based on a deviation between the actual receive time of the first synchronisation telegram determined on the basis of the time base and the reference receive time at the first node, and wherein the program means are embodied for generating a second synchronisation telegram (114) for a second node, and the second synchronisation telegram contains a second reference receive time ($t_0 + \Delta t_L + \Delta t_{1 \to 2}$) at the second node, **characterised in that** the second reference receive time at the second node is determined as follows:

    -   determining of a residence time in the first node, based on the send time of the second synchronisation telegram and the receive time of the first synchronisation telegram,

    -   addition of a transmission propagation time ($\Delta t_{1 \to 2}$) between the first node and the second node to the first reference receive time at the first node in order to determine the second reference receive time.

4.  Digital storage medium according to claim 3, wherein the program means are embodied for determining the transmission propagation time between the first and the second node.

5.  Node (1) for an isochronous communication system, having a time base (107) and having control means (108) for adjusting the time base (107), with the control means being embodied such that the adjustment of the time base is performed at the node based on a deviation between the actual receive time of a first synchronisation telegram (106) determined on the basis of the time base and the first reference receive time ($t_0 + \Delta t_L$) contained in the synchronisation telegram, having means for generating a second synchronisation telegram (114) for another node (2), with the second synchronisation telegram containing a second reference receive time (to + $\Delta t_L + \Delta t_{1 \to 2}$) at the other node, **characterised in that** the second reference receive time at the other node can be determined as follows:

- determining of a residence time from the difference between the send time of the second synchronisation telegram and the receive time of the first synchronisation telegram,
- addition of the transmission propagation time ($\Delta t_{1\rightarrow2}$) between the node and the other node to the first reference receive time at the node in order to determine the second reference receive time.

6. Node according to claim 5, having means for determining the transmission propagation time between the node and the adjacent other node.

7. Communication system comprising at least one clock master having a master time base (103) and having means for transmitting a first synchronisation telegram (106) to an adjacent first node (1) of the communication system, with the first synchronisation telegram containing a reference receive time at the first node which is determined from the send time of the first synchronisation telegram from the clock master and the transmission propagation time (104) between the clock master and the first node, and having a plurality of nodes (2, 3) according to one of the preceding claims 5 or 6.

**Revendications**

1. Procédé pour la synchronisation de noeuds (1, 2, 3) d'un système de communication avec les étapes suivantes :

   - réception d'un premier télégramme de synchronisation (106) par un premier noeud (1), le premier télégramme de synchronisation contenant un premier instant de réception de consigne ($t_0 + \Delta t_L$) au premier noeud,
   - post-régulation d'une base de temps (107) du premier noeud en fonction d'un écart entre un instant de réception réel, déterminé à partir de la base de temps, et l'instant de réception de consigne,
   - émission d'un deuxième télégramme de synchronisation (114) par le premier noeud vers un deuxième noeud voisin (2), le deuxième télégramme de synchronisation contenant un deuxième instant de réception de consigne ($t_0 + \Delta t_L + \Delta t_{1\rightarrow2}$) au deuxième noeud,

   **caractérisé par le fait que** le deuxième instant de réception de consigne au deuxième noeud est déterminé par :

   - détermination d'un temps de séjour à partir de l'instant d'émission du deuxième télégramme de synchronisation et de l'instant de réception du premier télégramme de synchronisation,
   - addition du temps de séjour et d'un temps de propagation ($\Delta t_{1\rightarrow2}$) entre le premier noeud et le deuxième noeud au premier instant de réception de consigne au premier noeud pour déterminer le deuxième instant de réception de consigne.

2. Procédé selon la revendication 1, le premier télégramme de synchronisation étant produit par un maître d'horloge (100) avec une base de temps de maître (103), l'instant de réception de consigne au premier noeud étant déterminé à partir du temps d'émission, déterminé en fonction de la base de temps de maître, et du temps de propagation (104) du maître d'horloge au premier noeud.

3. Support de mémorisation numérique, notamment disquette, CD-ROM ou mémoire à semi-conducteur, avec des moyens formant programmes pour la post-régulation de la base de temps (107) d'un premier noeud (1) d'un système de communication en fonction de la réception d'un premier télégramme de synchronisation (106) par le premier noeud (1), le télégramme de synchronisation contenant un premier instant de réception de consigne ($t_0 + \Delta t_L$) au premier noeud, la post-régulation de la base de temps du premier noeud s'effectuant en fonction d'un écart entre l'instant de réception réel, déterminé en fonction de la base de temps, du premier télégramme de synchronisation et l'instant de réception de consigne au premier noeud et les moyens formant programmes étant conçus pour la production d'un deuxième télégramme de synchronisation (114) pour un deuxième noeud et le deuxième télégramme de synchronisation contenant un deuxième instant de réception de consigne ($t_0 + \Delta t_L + \Delta t_{1\rightarrow2}$) au deuxième noeud,
   **caractérisé par le fait que** le deuxième instant de réception de consigne au deuxième noeud est déterminé comme suit :

   - détermination d'un temps de séjour dans le premier noeud à partir de l'instant d'émission du deuxième télégramme de synchronisation et de l'instant de réception du premier télégramme de synchronisation,
   - addition d'un temps de propagation ($\Delta t_{1\rightarrow2}$) entre le premier noeud et le deuxième noeud au premier instant de réception de consigne au premier noeud pour déterminer le deuxième instant de réception de consigne.

4. Support de mémorisation numérique selon la revendication 3, les moyens formant programmes étant conçus pour la détermination du temps de propagation entre le premier et le deuxième noeud.

5. Noeud (1) pour un système de communication isochrone, avec une base de temps (107) et avec des moyens de régulation (108) pour la régulation de la base de temps (107), les moyens de régulation étant conçus de telle sorte que la régulation de la base de temps est effectuée en fonction d'un écart entre l'instant de réception réel, déterminé en fonction de la base de temps, d'un premier télégramme de synchronisation (106) et le premier instant de réception de consigne ($t_0 + \Delta t_L$) au noeud, instant contenu dans le télégramme de synchronisation, avec des moyens pour la production d'un deuxième télégramme de synchronisation (114) pour un autre noeud (2), le deuxième télégramme de synchronisation contenant un deuxième instant de réception de consigne ($t_0 + \Delta t_L + \Delta t_{1\rightarrow 2}$) à l'autre noeud,

   **caractérisé par le fait que** le deuxième instant de réception de consigne à l'autre noeud peut être déterminé comme suit :

   - détermination d'un temps de séjour à partir de la différence entre l'instant d'émission du deuxième télégramme de synchronisation et l'instant de réception du premier télégramme de synchronisation,
   - addition du temps de propagation ($\Delta t_{1\rightarrow 2}$) entre le noeud et l'autre noeud au premier instant de réception de consigne au noeud pour déterminer le deuxième instant de réception de consigne.

6. Noeud selon la revendication 5, avec des moyens pour la détermination du temps de propagation entre le noeud et l'autre noeud voisin.

7. Système de communication avec au moins un maître d'horloge comportant une base de temps de maître (103) et des moyens pour l'émission d'un premier télégramme de synchronisation (106) à un premier noeud voisin (1) du système de communication, le premier télégramme de synchronisation contenant un instant de réception de consigne au premier noeud qui est déterminé à partir de l'instant d'émission du premier télégramme de synchronisation par le maître d'horloge et du temps de propagation (104) entre le maître d'horloge et le premier noeud, et avec plusieurs noeuds (2, 3) selon l'une des revendications précédentes 5 ou 6.

**FIG 1**

Uhrzeitmaster

100

$t_0$

101 $\Delta t_L$

1 — Antrieb

von Knoten 1 gesendete Zeit
$$t_0 + \Delta t_L + \Delta t_{1 \to 2}$$

102

2 — Antrieb

von Knoten 2 gesendete Zeit
$$t_0 + \Delta t_L + \Delta t_{1 \to 2} + \Delta t_{2 \to 3}$$

3 — Antrieb

von Knoten 3 gesendete Zeit
$$t_0 + \Delta t_L + \Delta t_{1 \to 2} + \Delta t_{2 \to 3} + \Delta t_{3 \to 4}$$

• • •

$t_0 :=$ Sendezeitpunkt des Synchronisations-telegramms beim Uhrzeitmaster

$\Delta t_L :=$ Leitungslaufzeit

$\Delta t_{n \to m} :=$ Aufenthaltszeit im Netzwerk-Knoten n + Leitungslaufzeit von n nach m

# FIG 2

**Uhrzeitmaster** ~100

- Zeitbasis — 103
- Leitungslaufzeit — 104
- Programm — 105

101 → Synchronisationstelegramm — 106

**Knoten** ~1

- Empfangszeitpunkt — 109
- Sendezeit + Leitungslaufzeit — 110
- Zeitbasis — 107
- Regelung — 108
- Sendezeit — 111
- Leitungslaufzeit — 112
- Programm — 113

102 → Synchronisationstelegramm — 114

**Knoten** ~2

# FIG 3

**300**

Uhrzeitmaster: Synchronisationstelegramm mit
(Sendezeit + Leitungslaufzeit)

**301**

Knoten 1:

- Speicherung Empfangszeitpunkt (lokale Zeitbasis) des
  Synchronisationstelegramms und (Sendezeit + Leitungslaufzeit)

- Nachregelung der lokalen Zeitbasis aufgrund Differenz
  Empfangszeitpunkt - (Sendezeit + Leitungslaufzeit)

- Sendung Synchronisationstelegramm an Knoten 2 mit
  (Sendezeit + Leitungslaufzeit + Aufenthaltszeit in
  Knoten 1 + Leitungslaufzeit von Knoten 1 nach Knoten 2)

**302**

Knoten 2:
. . .

# FIG 4

Messung der Leitungslaufzeit $\Delta t_L$
zwischen zwei Netzwerk-Knoten

$$\Delta t_L := 0.5 \times \{ (t_{Rec-Resp} - t_{Send-Req}) - (t_{Send-Resp} - t_{Rec-Req}) \}$$